# EUROPÄISCHE PATENTSCHRIFT

(11) **EP 1 663 588 B1**
(45) Veröffentlichungstag und Bekanntmachung des Hinweises auf die Patenterteilung: **01.01.2014**
(21) Anmeldenummer: 04762385.5
(22) Anmeldetag: 14.07.2004
(51) Int. Cl.: B27B 9/02, B23D 47/02

(54) **GRUNDPLATTE FÜR EIN ELEKTROWERKZEUG UND VERFAHREN ZUR HERSTELLUNG DERSELBEN**
BASE PLATE FOR AN ELECTRIC POWER TOOL AND METHOD FOR PRODUCING THE SAME
PLAQUE DE MONTAGE D'UN OUTIL ELECTRIQUE ET SON PROCEDE DE PRODUCTION

(30) Priorität: 12.09.2003 DE 10342154
(43) Veröffentlichungstag der Anmeldung: 07.06.2006
(73) Patentinhaber: ROBERT BOSCH GMBH, 70442 Stuttgart (DE)
(72) Erfinder: FUCHS, Wolfgang, 70794 Filderstadt (DE); ROEHM, Heiko, 70176 Stuttgart (DE); GAIRING, Juergen, 70195 Stuttgart (DE); BLUM, Jens, 70794 Filderstadt (DE)
(86) Internationale Anmeldenummer: PCT/DE2004/001525
(87) Internationale Veröffentlichungsnummer: WO 2005/025821

(56) Entgegenhaltungen:
- EP-A- 0 466 294
- EP-A- 0 990 492
- EP-A1- 1 428 636
- US-A- 1 854 510
- US-A- 5 819 420
- US-B1- 6 484 410

## Beschreibung

### Stand der Technik

Die Erfindung geht aus von einer Grundplatte für ein Elektrowerkzeug mit den gattungsbildenden Merkmalen des Anspruchs 1. Eine solche Grundplatte ist der EP 0 990 492 zu entnehmen.

Es sind Grundplatten für handgeführte Kreis-, Stichsägen, Mauemut- und Oberfräsen bekannt, die als flächiges Bauteil mit geringer Bauhöhe ausgebildet sind. Diese dienen zur Führung des Elektrowerkzeugs auf einem Werkstück. Prinzipiell gibt es drei Ausführungsformen der Grundplatten.

Zum Ersten sind Grundplatten bekannt, die aus Stahlblech als ein Stanz-Biegeteil ausgeführt sind. Sie weisen typischerweise Längssicken und einen umlaufenden Kragen auf, die zur Erhöhung der Steifheit dienen, da die Blechstärken lediglich zwischen 1,5 und 2,5 mm liegen. Solche Bauteile sind günstig herzustellen, da unter anderem technische Funktionen, wie Aufnahme eines Parallelanschlags oder Drehpunkte für die Winkeleinstellung, durch Teile ermöglicht werden, die direkt aus dem Blech geformt werden können, ohne dass eine nachträgliche Bearbeitung nötig ist. Darüber hinaus können verbogene Grundplatten auch wieder zurückgebogen werden. Allerdings haben solche Grundplatten den Nachteil, dass sie ein hohes Gewicht haben.

Zum Zweiten sind Stanzteile aus Leichtmetall bekannt, die keinen umlaufenden Kragen haben. Um eine ausreichende Steifigkeit zu erzielen, werden Blechdicken von 5 bis 6 mm verwendet. Zur Herstellung der technischen Funktionen werden allerdings Aufbauten benötigt. Eine solche Grundplatte kann bei einer Verbiegung ebenfalls zurückgebogen werden und weist ein geringes Gewicht auf. Allerdings ist eine solche Grundplatte teuer in der Herstellung, da sie mit Aufbauten bestückt werden muss.

Zum Dritten sind Gussteile aus Leichtmetall-Legierungen bekannt, die zwar ein sehr geringes Gewicht und eine hohe Steifigkeit aufweisen. Allerdings ist die Herstellung dieser Grundplatten mit sehr hohen Kosten verbunden, da sie nachbearbeitet werden müssen. Darüber hinaus neigen solche Gussteile bei einer Schlagbelastung zum Brechen.

Aus der EP 0 990 492 A2 ist eine Grundplatte für ein Elektrowerkzeug bekannt, bestehend aus einem Blech, welches im Stanz-Biege-Verfahren hergestellt ist und einen umlaufenden Kragen aufweist. In die Grundplatte ist eine Ausnehmung zur Aufnahme eines Sägeblattes eingebracht, wobei die Ausnehmung von einem inneren, durchbrochenen Kragen begrenzt ist.

Im Bereich einer Stirnseite der Grundplatte ist ein erstes Schwenk-Führungsmittel angeordnet, dem axial gegenüberliegend ein zweites Schwenk-Führungsmittel an der Grundplatte zugeordnet ist, wobei die Schwenk-Führungsmittel die Anbindung an das Gehäuse des Elektrowerkzeugs ermöglichen und eine gemeinsame Schwenkachse definieren. Die Schwenk-Führungsmittel sind jeweils mehrteilig aufgebaut und umfassen zusätzlich zu einteilig mit der Grundplatte ausgebildeten Teilen auch separate Befestigungsmittel.

### Vorteile der Erfindung

Eine erfindungsgemäße Grundplatte für ein Elektrowerkzeug mit den Merkmalen des Anspruchs 1 hat dem gegenüber den Vorteil, dass durch die Verwendung eines Blechs aus Leichtmetall und eine einstückige Ausbildung der Grundplatte eine günstige Fertigung erzielt werden kann, wobei die Grundplatte nur ein geringes Gewicht bei einer hohen Steifigkeit aufweist sowie bei einer Verbiegung wieder zurückgebogen werden kann und darüber hinaus bei einer Schlagbelastung nicht bricht. Erfindungsgemäß wird eine solche Grundplatte durch ein Stanz-Biege-Verfahren hergestellt.

Dadurch, dass die Materialstärke des Blechs kleiner als 4 mm, insbesondere 3 mm, ist, wird eine besonders leichte und trotzdem eine ausreichende Steifigkeit aufweisende Grundplatte erhalten. Besonders vorteilhaft ist es dabei, ein Blech aus einer Aluminiumlegierung zu verwenden.

Dadurch, dass zumindest ein Versteifungselement als ein umlaufender Kragen ausgebildet ist, wird eine Grundplatte mit besonders hoher Steifigkeit bei einem geringen Gewicht erhalten. Eine besonders gute Steifigkeit erhält man dabei, wenn der umlaufende Kragen vorzugsweise mindestens eine Höhe der zweifachen Materialstärke des Blechs aufweist.

Dadurch, dass zumindest ein Versteifungselement vorzugsweise als eine Quer-, Diagonal- oder Längssicke ausgebildet ist, wird die Steifigkeit der Grundplatte noch weiter erhöht.

Durch eine vorzugsweise einstückige Ausbildung von Warzen und einen Gewindedom zur Führung und Positionierung eines Parallelanschlags, der einstückig mit der Grundplatte ausgeführt ist, sind keine Aufbauten auf der Grundplatte zur Anbringung eines parallelen Anschlags nötig. Bei einer einstückigen Ausbildung von Verbindungselementen für eine Winkelverstellung eines Sägeblattes mit der Grundplatte sind ebenfalls keine zusätzlichen Aufbauten für die Verschwenkung der Schnittebene nötig. Durch eine vorzugsweise einstückige Ausbildung eines Führungskanals mit der Grundplatte kann das Elektrowerkzeug auf eine Führungsschiene aufgesetzt werden, ohne dass Aufbauten zur Realisierung nötig sind. Durch die drei vorgenannten Maßnahmen wird jeweils eine Reduzierung der Herstellungskosten der Grundplatte erzielt, was insbesondere bei einer Kombination der drei Maßnahmen zu einem erheblichen Sparpotenzial führt.

Dadurch, dass die Verbindungselemente Bohrungen aufweisen, durch die eine Drehachse für die Winkelverstellung eines Sägeblattes definiert wird, sind schon die Elemente einstückig an der Grundplatte angebracht, die nötig sind, um den Winkel eines Sägeblattes ändern zu können, ohne dass weitere Aufbauten benötigt würden. Somit ist eine kostengünstige Herstellung der Grundplatte gegeben.

Weitere vorteilhafte Ausgestaltungen der Erfindung sind Gegenstand der Unteransprüche.

### Zeichnungen

Ein Ausführungsbeispiel der Erfindung ist in der nachstehenden Beschreibung an Hand der zugehörigen Zeichnung näher erläutert.

Die Figuren zeigen:
- Figur 1: eine räumliche Darstellung einer Handkreissäge,
- Figur 2: Draufsicht auf eine erfindungsgemäße Grundplatte (um 180 ° gegenüber der in Fig. 1 gedreht) und
- Figur 3: eine räumliche Darstellung der in Fig. 2 dargestellten erfindungsgemäßen Grundplatte.

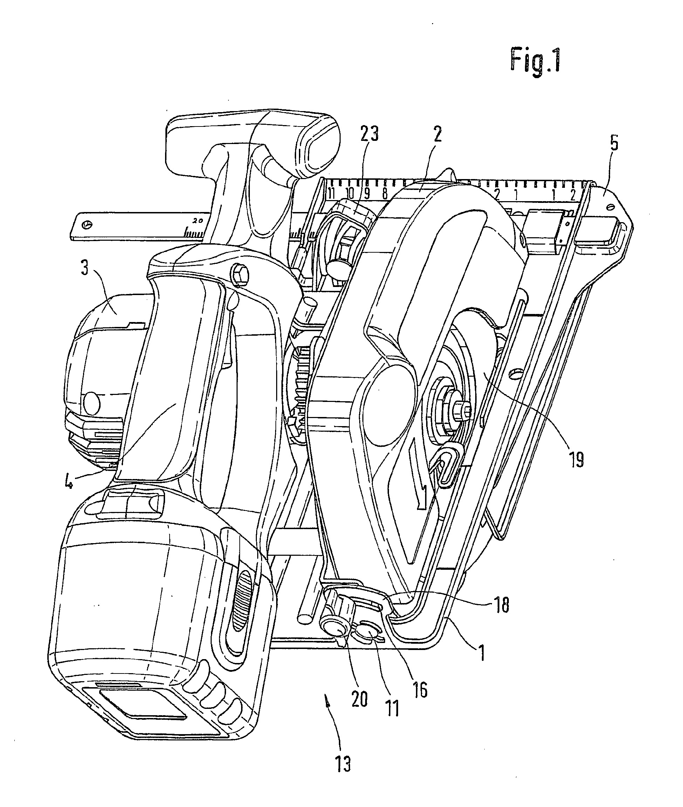

In Figur 1 ist ein Elektrowerkzeug 13 in Form einer handgeführten Kreissäge dargestellt. Das Elektrowerkzeug 13 weist eine erfindungsgemäße Grundplatte 1 auf, auf der ein Motor in einem Motorgehäuse 3 befestigt ist. Der Motor treibt ein Sägeblatt 19 an, das unter einer Schutzhaube 2 angeordnet ist. Das Elektrowerkzeug 13 wird mittels eines Handgriffs 4 bewegt. An der Grundplatte 1 ist ein verstellbarer Parallelanschlag 5 angeordnet. Das Sägeblatt 19 ist so mit der Grundplatte 1 verbunden, dass es zwischen einer zur Grundplatte 1 senkrechten Ebene und einer um einen Winkel verschwenkten Sägeebene bewegt werden kann. Dazu ist an der Grundplatte 1 ein Verbindungselement 18 angeordnet, welches eine Bohrung 11 zur Aufnahme der Schwenkachse (nicht dargestellt) und eine Schwenkkulisse 16 aufweist. In der Schwenkkulisse 16 wird ein mit dem Sägeblatt 19 mittelbar verbundener Stift geführt, der in seiner Position innerhalb der Schwenkkulisse 16 mittels einer Flügelschraube 20 festgelegt werden kann. Der vorgenannte Aufbau des Elektrowerkzeugs 13 ist prinzipiell aus dem Stand der Technik bekannt.

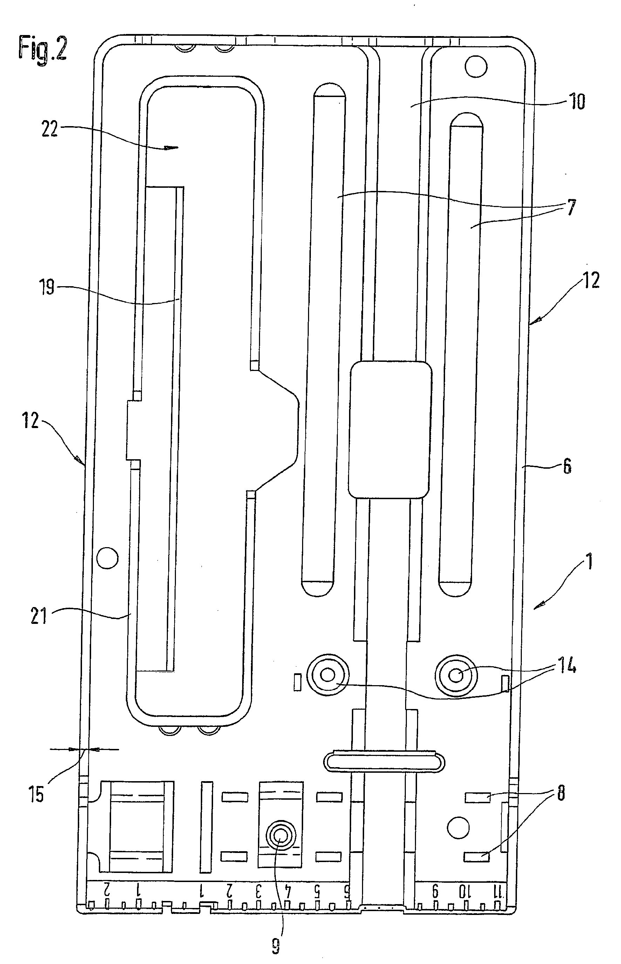

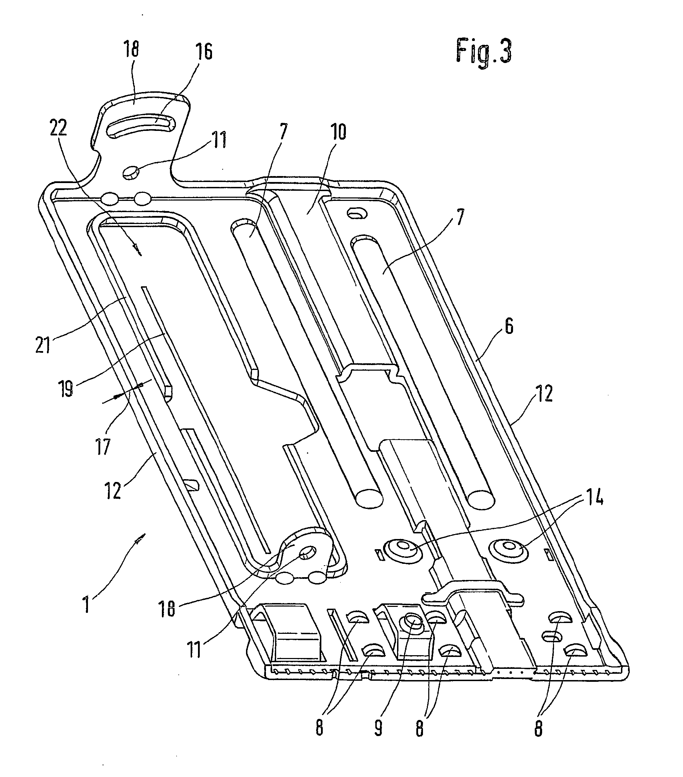

Die erfindungsgemäßen Merkmale der Grundplatte 1 sind am besten anhand der Figuren 2 und 3 zu erkennen und werden im Folgenden beschrieben.

Die Grundplatte 1 ist einstückig aus einem Blech aus Leichtmetall mittels eines Stanz-Biege-Verfahrens hergestellt. Anders als bei einem Stanzverfahren wird somit eine dreidimensionale Form der Grundplatte 1 erreicht. Die dargestellte Grundplatte 1 besteht aus einer Aluminiumlegierung mit einer Materialstärke 15 von 3 mm. Eine solche Grundplatte 1 weist eine vergleichbare Biegefestigkeit auf wie aus einem 2 mm dicken Stahlblech. Allerdings ist aufgrund der bedeutend geringeren Dichte der Aluminiumlegierung gegenüber derjenigen von Stahl - trotz der Materialstärkenerhöhung - ca. eine Halbierung des Gewichts erreicht worden.

Die gute Steifigkeit der erfindungsgemäßen Grundplatte 1 wird durch einen umlaufenden Kragen 6 erreicht. Der umlaufende Kragen 6 weist eine Höhe 17 auf, die bei gut dem zweifachen der Materialstärke 15 des Blechs liegt. Sie beträgt ca. 6,5 mm an der Innenseite und 9 mm an der Außenseite. Zur weiteren Erhöhung der Steifigkeit der Grundplatte 1 sind parallel zur Ausrichtung des Sägeblatts 19 zwei Längssicken 7 ausgebildet. Dadurch wird eine Steifigkeit erreicht, die im Bereich von alternativen Ausführungsformen liegt.

Darüber hinaus wird die Steifigkeit noch durch einen weiteren Kragen 21 erhöht, der eine Ausnehmung 22 für das Sägeblatt 19 begrenzt.

Zur Aufnahme einer Vorrichtung, die das Sägeblatt 19 führt, sind zwei Verbindungselemente 18 einstückig an der Grundplatte 1 ausgebildet. Diese stehen beide senkrecht über die Ebene der Grundplatte 1 heraus. Eine der beiden Verbindungselemente 18 ist ein Teil des weiteren Kragens 21, das andere Verbindungselement 18 ist ein Teil des umlaufenden Kragens 6. Jedes der beiden Verbindungselemente 18 weist eine Bohrung 11 auf, in der die Schwenkachse gelagert ist, die mittelbar mit dem Sägeblatt 19 verbunden ist und die Schnittebene der Kreissäge festlegt. An dem Verbindungselement 18, welches ein Teil des umlaufenden Kragen 6 ist, ist neben der Bohrung 11 noch eine Schwenkkulisse 16 ausgebildet, deren Funktion schon oben anhand der Fig. 1 ausgeführt wurde.

Der umlaufende Kragen 6 ist an seinen Längsseiten, das bedeutet parallel zum Sägeblatt 19, jeweils als eine Anschlagfläche 12 ausgebildet. Dadurch ist es in einfacher Art und Weise möglich, das Elektrowerkzeug 13 entlang einer Latte oder eines ähnlichen geraden Gegenstandes zu führen.

Um den Parallelanschlag 5 an der Grundplatte 1 in unterschiedlichen Positionen festlegen zu können, ist ein Gewindedom 9 vorhanden, der eine Flügelschraube (nicht gezeigt) aufnimmt und den Parallelanschlag in seiner Position festklemmt. Um eine saubere parallele Führung des Parallelanschlags 5 zu erreichen, sind an der Grundplatte 1 mehrere Warzen 8 ausgebildet. Sowohl der Gewindedom 9 als auch die Warzen 8 sind hierbei einstückig mit der Grundplatte 1 ausgebildet.

Zur Verbindung der Grundplatte 1 mit dem Gehrungswinkel 23 ist eine Reihe von Anbindungselementen 14 einstückig in der Grundplatte 1 ausgebildet. Die prinzipielle Verbindung der Grundplatte 1 mit dem Gehrungswinkel 23 ist aus dem Stand der Technik wohl bekannt und wird im Weiteren nicht näher beschrieben, da sie nicht erfindungswesentlich ist.

Die obigen Ausführungen zur Materialstärke 15 des Blechs und der Höhe 17 des umlaufenden Kragens 6 sind lediglich exemplarisch. Für den Fachmann ist klar, dass auch andere Werte Verwendung finden können, ohne dass der Erfindungsgedanke darauf nicht mehr anzuwenden wäre.

Zusammenfassend kann gesagt werden, dass durch die erfindungsgemäße Grundplatte 1, die erfindungsgemäß durch ein Stanz-Biege-Verfahren hergestellt wird, die Vorteile der bekannten Grundplattenausführungen, nämlich als Stanz-Biegeteil aus Stahlblech, als Stanzteil aus Leichtmetall und als Gussteil aus einer Leichtmetall-Legierung, erzielt werden, ohne die Nachteile der drei genannten Teile zu übernehmen.

Gegenüber dem Stanz-Biegeteil aus Stahlblech weist die erfindungsgemäße Grundplatte 1 ein deutlich reduziertes Gewicht bei vergleichbarer Steifigkeit auf. Gegenüber den Stanzteilen, die aufgrund des Stanzprozesses lediglich zweidimensional gestaltet werden können, weist die erfindungsgemäße Grundplatte 1 eine deutlich geringere Materialstärke 15 auf. Im vorliegenden Fall liegt die Materialstärke 15 bei 3 mm, wohingegen für Stanzteile typischerweise Materialstärken 15 größer 5 mm nötig sind. Diese große Materialstärke 15 ist nötig, um die seitliche Anschlagfläche 12, die hier durch den umlaufenden Kragen 6 gegeben ist, zu erhalten. Bei dem Stanzteil ist die Höhe 17 der Anschlagfläche gleich der Materialstärke 15. Darüber hinaus ist es bei den bekannten Stanzteilen nötig, zusätzliche Aufbauten für die Aufnahmegeometrie des Parallelanschlags 5 sowie für die Winkelverstellung des Sägeblattes 19 vorzusehen. Dies führt zum Einen zu einem größeren Materialverbrauch und somit höherem Gewicht und zum Anderen zu einer mit höheren Kosten verbundenen Fertigung des Stanzteils. Die erfindungsgemäße Grundplatte 1 aus einer Leichtmetall-Legierung, die mittels des Stanz-Biege-Verfahrens hergestellt wurde, ist dagegen mit Aussteifungselementen, die nicht die gesamte Grundplatte 1 mit einer höheren Materialstärke 15 erforderlich machen, ausgestattet. Auch die seitlichen Anschlagflächen 12 können unabhängig von der Materialstärke 15 auf die gewünschte Höhe 17 eingestellt werden. Die notwendige Materialstärke 15 kann somit bei gleicher Funktionalität gegenüber den Stanzteilen reduziert werden, woraus sich eine Gewichts- und Kostenersparnis ergibt.

Zwar kann ein Leichtmetallgussteile als Grundplatte verwendet werden, das eine Aufnahmegeometrie für den Parallelanschlag aufweist, allerdings ist hierfür eine spanende Nacharbeit des Gussteils notwendig. Demnach ist eine erfindungsgemäße Grundplatte 1, die nach dem Stanz-Biege-Verfahren hergestellt wurde preiswerter, da keine nachträgliche Bearbeitung notwendig ist. Darüber hinaus hat die erfindungsgemäße Grundplatte 1 gegenüber einem Gussteil den Vorteil, dass sie eine höhere Duktilität aufweist. Ein gegossenes Metall ist spröder als ein für Umformprozesse geeignetes Metall. Bei Schlagbeanspruchung bedeutet dies, dass das Gussteil deutlich leichter bricht als ein aus einem gewalzten Blech hergestelltes Teil. Die erfindungsgemäße Grundplatte 1 kann nach einem Sturz und einer Verbiegung wieder zurückgebogen werden und ist weiterhin verwendungsfähig. Dem gegenüber neigt ein Gussteil beim Herunterfallen zum Brechen. Die durch das Leichtmetallgussteil erzielte Reduktion des Gewichts wird durch eine erfindungsgemäße Grundplatte 1 ebenso erreicht, so dass das Gussteil gegenüber dieser keinen Vorteil besitzt.

### Bezugszeichenliste

- 1: Grundplatte
- 2: Schutzhaube
- 3: Motorgehäuse
- 4: Handgriff
- 5: Parallelanschlag
- 6: umlaufender Kragen
- 7: Längssicke
- 8: Warze
- 9: Gewindedom
- 10: Führungskanal
- 11: Bohrung
- 12: Anschlagfläche
- 13: Elektrowerkzeug
- 14: Anbindungselement
- 15: Materialstärke
- 16: Schwenkkulisse
- 17: Höhe des umlaufenden Kragens
- 18: Verbindungselement
- 19: Sägeblatt
- 20: Flügelschraube
- 21: weiterer Kragen
- 22: Ausnehmung
- 23: Gehrungswinkel

## Patentansprüche

1. Grundplatte (1) für ein Elektrowerkzeug (13), insbesondere für handgeführte Kreissägen, Stichsägen, Mauernut- und Oberfräsen, aus einem Blech, mit aus der Ebene des Blechs herausragenden Versteifungselementen, wovon mindestens eines als seitliche Anschlagfläche (12) ausgebildet ist, und mit aus der Ebene des Blechs herausragenden Anbindungselementen (14) zur Befestigung der Grundplatte (1) an dem Gehrungswinkel (23), wobei die gesamte Grundplatte (1) einstückig ausgebildet und im Stanz-Biege-Verfahren hergestellt ist, und wobei Verbindungselemente (18) für eine Winkelverstellung einstückig mit der Grundplatte (1) ausgebildet sind, mit einem umlaufenden Kragen (6) an der Grundplatte (1) und mit einem weiteren Kragen (21), der eine Ausnehmung (22) für das Sägeblatt (19) begrenzt, wobei ein Verbindungselement (18) Teil des umlaufenden Kragens (6) ist und eine Schwenkkulisse (16) aufweist, **dadurch gekennzeichnet, dass** das Blech aus Leichtmetall besteht, dass die Materialstärke (15) des Blechs kleiner als 4 mm ist und dass die Verbindungselemente (18) Bohrungen (11) aufweisen, durch die eine Drehachse für die Winkelverstellung eines Sägeblattes (19) definiert wird, und dass das andere Verbindungselement (18) Teil des weiteren, die Ausnehmung (22) begrenzenden Kragens (21) ist.

2. Grundplatte nach Anspruch 1, **dadurch gekennzeichnet, dass** die Materialstärke (15) des Blechs 3 mm ist.

3. Grundplatte nach Anspruch 1 oder 2, **dadurch gekennzeichnet, dass** das Blech aus einer Leichtmetalllegierung besteht.

4. Grundplatte nach Anspruch 3, **dadurch gekennzeichnet, dass** das Blech aus einer Aluminium- oder Magnesiumlegierung besteht.

5. Grundplatte nach einem der vorstehenden Ansprüche, **dadurch gekennzeichnet, dass** der umlaufende Kragen (6) mindestens eine Höhe (17) der zweifachen Materialstärke (15) des Blechs hat.

6. Grundplatte nach einem der vorstehenden Ansprüche, **dadurch gekennzeichnet, dass** zumindest ein Versteifungselement als eine Quer-, Diagonal- oder Längssicke (7) ausgebildet ist.

7. Grundplatte nach einem der vorstehenden Ansprüche, **dadurch gekennzeichnet, dass** Warzen (8) und ein Gewindedom (9) zur Führung und Positionierung eines Parallelanschlags (5) einstückig mit der Grundplatte (1) ausgebildet sind.

8. Grundplatte nach einem der vorstehenden Ansprüche, **dadurch gekennzeichnet, dass** ein Führungskanal (10) einstückig mit der Grundplatte (1) ausgebildet ist.

## Claims

1. Base plate (1) for an electric tool (13), in particular for hand-held circular saws, jigsaws, wall chasers and routers, made of a metal sheet, having reinforcement elements projecting from the plane of the metal sheet, at least one of said reinforcement elements being formed as a lateral stop surface (12), and having attachment elements (14), projecting from the plane of the metal sheet, for fastening the base plate (1) to the mitre square (23), wherein the entire base plate (1) is formed in one piece and produced in a stamping-bending process, and wherein connecting elements (18) for angular adjustment are formed in one piece with the base plate (1), having a peripheral flange (6) on the base plate (1) and having a further flange (21) which delimits a cutout (22) for the saw blade (19), wherein one connecting element (18) is part of the peripheral flange (6) and has a pivoting slotted guide (16), **characterized in that** the metal sheet consists of light metal, **in that** the material thickness (15) of the metal sheet is less than 4 mm, and **in that** the connecting elements (18) have holes (11) by way of which a pivot axis for the angular adjustment of a saw blade (19) is defined, and **in that** the other connecting element (18) is part of the further flange (21) delimiting the cutout (22).

2. Base plate according to Claim 1, **characterized in that** the material thickness (15) of the metal sheet is 3 mm.

3. Base plate according to Claim 1 or 2, **characterized in that** the metal sheet consists of a light metal alloy.

4. Base plate according to Claim 3, **characterized in that** the metal sheet consists of an aluminium or magnesium alloy.

5. Base plate according to one of the preceding claims, **characterized in that** the peripheral flange (6) has at least a height (17) twice the material thickness (15) of the metal sheet.

6. Base plate according to one of the preceding claims, **characterized in that** at least one reinforcement element is in the form of a transverse, diagonal or longitudinal rib (7).

7. Base plate according to one of the preceding claims, **characterized in that** protuberances (8) and a threaded mandrel (9) for guiding and positioning a parallel stop (5) are formed in one piece with the base plate (1).

8. Base plate according to one of the preceding claims, **characterized in that** a guide channel (10) is formed in one piece with the base plate (1).

## Revendications

1. Plaque de base (1) d'un outil électrique (13), en particulier pour des scies circulaires, des scies sauteuses, des rainureuses et des défonceuses manuelles, formée d'une tôle, avec des éléments de renforcement faisant saillie hors du plan de la tôle, dont au moins l'un est réalisé sous forme de face de butée latérale (12), et avec des éléments de liaison (14) faisant saillie hors du plan de la tôle pour la fixation de la plaque de base (1) à la boîte à onglet (23), l'ensemble de la plaque de base (1) étant réalisé d'une seule pièce et étant fabriqué dans un procédé d'estampage-cintrage, et des éléments de connexion (18) pour un réglage angulaire étant réalisés d'une seule pièce avec la plaque de base (1), avec une bordure périphérique (6) sur la plaque de base (1) et avec une autre bordure (21) qui délimite un évidement (22) pour la lame de scie (19), un élément de connexion (18) faisant partie de la bordure périphérique (6) et présentant une coulisse pivotante (16), **caractérisée en ce que** la tôle se compose de métal léger, **en ce que** l'épaisseur de matériau (15) de la tôle est inférieure à 4 mm et **en ce que** les éléments de connexion (18) présentent des alésages (11) par lesquels est défini un axe de rotation pour le réglage angulaire d'une lame de scie (19), et **en ce que** l'autre élément de connexion (18) fait partie de l'autre bordure (21) délimitant l'évidement (22).

2. Plaque de base selon la revendication 1, **caractérisée en ce que** l'épaisseur de matériau (15) de la tôle est de 3 mm.

3. Plaque de base selon la revendication 1 ou 2, **caractérisée en ce que** la tôle se compose d'un alliage de métaux légers.

4. Plaque de base selon la revendication 3, **caractérisée en ce que** la tôle se compose d'un alliage d'aluminium ou de magnésium.

5. Plaque de base selon l'une quelconque des revendications précédentes, **caractérisée en ce que** la bordure périphérique (6) présente au moins une hauteur (17) représentant deux fois l'épaisseur de matériau (15) de la tôle.

6. Plaque de base selon l'une quelconque des revendications précédentes, **caractérisée en ce qu'**au moins un élément de renforcement est réalisé sous forme de moulure transversale, diagonale ou longitudinale (7).

7. Plaque de base selon l'une quelconque des revendications précédentes, **caractérisée en ce que** des boursouflures (8) et un dôme fileté (9) sont réalisés pour guider et positionner une butée parallèle (5) d'une seule pièce avec la plaque de base (1).

8. Plaque de base selon l'une quelconque des revendications précédentes, **caractérisée en ce qu'**un canal de guidage (10) est réalisé d'une seule pièce avec la plaque de base (1).
